# EUROPÄISCHE PATENTSCHRIFT

(11) **EP 2 842 764 B1**
(45) Veröffentlichungstag und Bekanntmachung des Hinweises auf die Patenterteilung: **18.01.2017**
(21) Anmeldenummer: 13181730.6
(22) Anmeldetag: 26.08.2013
(51) Int. Cl.: B60B 27/02, G01L 3/00, G01L 3/10

(54) **Radnabenübertragungseinheit für ein Antriebrad eines Fahrzeugs, Antriebrad und hilfsangetriebenes Fahrzeug**
Wheel hub transmission unit for a drive wheel of a vehicle, drive wheel and vehicle with an auxiliary drive
Unité de transmission de moyeu de roue pour une roue d'entraînement d'un véhicule, roue d'entraînement et véhicule à entraînement auxiliaire

(43) Veröffentlichungstag der Anmeldung: 04.03.2015
(73) Patentinhaber: Innotorq GmbH, 82152 Martinsried (DE)
(72) Erfinder: Theodor Piele, 82131 Gauting (DE)
(74) Vertreter: Fischer, Ernst

(56) Entgegenhaltungen:
- DE-A1-102012 016 903
- US-A- 5 163 740
- US-A1- 2011 120 232

## Beschreibung

Die Erfindung betrifft eine Radnabenübertragungseinheit für ein Antriebsrad eines Fahrzeugs, das Antriebsrad mit der Radnabenübertragungseinheit und das hilfsangetriebene Fahrzeug mit dem Antriebsrad entsprechend dem Oberbegriff des Anspruchs 1 und wie es aus Dokument DE 10 2012 016903 A1 bekannt ist.

Für die Erfüllung unterschiedlicher individueller Mobilitätsbedürfnisse gewinnen elektrisch angetriebene Fahrzeuge immer mehr an Bedeutung. Insbesondere ist das Elektrofahrrad auf dem Vormarsch, das ein von einem Elektromotor hilfsangetriebenes Fahrrad ist. Die elektrische Fahrunterstützung wird herkömmlich durch Pedalieren angefordert, indem entsprechend stark die an den Tretkurbeln des Fahrrads befestigten Pedale wechselseitig nach unten gedrückt werden. Zur Drehmomentübertragung auf das Antriebsrad des Fahrrads, in der Regel das Hinterrad, ist an den Tretkurbeln ein Kettenblatt montiert, das über eine Kette mit einem Ritzel gekoppelt ist, das in Antriebsrichtung drehstarr am Hinterrad montiert ist. Der Elektromotor ist herkömmlich in der Nabe des Hinterrads als ein Nabenmotor untergebracht, dessen Versorgung mit elektrischer Energie von Akkumulatorzellen bewerkstelligt ist. Mit einer Drehmomentmesseinrichtung wird die Stärke des Pedalierens erfasst, wobei ihr entsprechend mit einer Steuerungseinrichtung von den Akkumulatorzellen die elektrische Energie abgerufen wird, die dem Nabenmotor zum Hilfsantreiben des Elektrofahrrads zugeführt wird.

Für die Drehmomentmesseinrichtung ist es bekannt, eine Messhülse einzusetzen, die an der Nabe des Hinterrads angebaut ist. Die Messhülse ist aus nichtmagnetischem Material hergestellt, das mit einem entsprechenden Magnetisierungsmuster versehen ist, das sich unter Einwirkung eines Drehmoments auf die Messhülse verändert. Mit Hilfe eines elektrisch betriebenen Spulenpaares lässt sich diese Veränderung des Magnetisierungsmusters erfassen, wodurch auf die Größe des Drehmoments geschlossen werden kann. Zum Abgreifen des Magnetisierungsmusters ist das Spulenpaar unmittelbar benachbart zur Messhülse angeordnet. Außerdem ist zur ausreichend genauen Messung des Drehmoments die Messhülse mit einer entsprechend langen Messstrecke versehen, so dass die Messhülse an ihren beiden Längsenden radial und axial stabil gelagert ist. Somit ergibt sich das Problem, dass die Verkabelung des Spulenpaars schwierig ist und die Messhülse an der Nabe nachteilig einen großen Bauraum erfordert.

Aufgabe der Erfindung ist es, eine Radnabenübertragungseinheit für ein Antriebsrad eines Fahrzeugs, ein Antriebsrad mit der Radnabenübertragungseinheit und ein hilfsangetriebenes Fahrzeug mit dem Antriebsrad zu schaffen, wobei die Radnabenübertragungseinheit einfach im Aufbau und platzsparend ist.

Die Aufgabe wird gelöst mit den Merkmalen der Patentansprüche 1, 13 und 14. Bevorzugte Ausgestaltungen dazu sind in den weiteren Patentansprüchen angegeben.

Die erfindungsgemäße Radnabenübertragungseinheit für das Antriebsrad des Fahrzeugs weist eine Radnabe, einen konzentrisch zur Radnabe angeordneten Ritzelnabenträger, auf dem zum Antreiben des Antriebsrads mindestens ein Ritzel drehstarr montierbar ist, und eine radial zwischen den Ritzelnabenträger und der Radachse angeordnete Drehmomentübertragungseinrichtung auf, die eine konzentrisch zur Radachse angeordnete und aus einem magnetisch codierten Material hergestellte Übertragungshülse mit einem ersten Längsende, an dem eine Antriebskupplung vorgesehen ist, via die das erste Längsende und der Ritzelnabenträger verdrehstarr miteinander gekoppelt sind, und einen dem ersten Längsende abgewandt und im Axialabstand dazu angeordneten zweiten Längsende aufweist, an dem eine Abtriebskupplung vorgesehen ist, via die ein Drehmoment auf das Antriebsrad von der Übertragungshülse übertragbar ist, so dass axial zwischen den Kupplungen ein Messbereich der Übertragungshülse zum Messen des Drehmoments mit Hilfe der unter dem Einfluss des Drehmoments sich ändernden magnetischen Eigenschaften des magnetisch codierten Materials der Übertragungshülse ausgebildet ist, wobei die Übertragungshülse an ihrem ersten Längsende im Axialerstreckungsbereich der Antriebskupplung auf der Radachse mit einem Radiallager fliegend gelagert und im Radialabstand zur Radachse abgestützt ist, wodurch radial zwischen der Übertragungshülse im Messbereich und der Radachse ein Ringraum zum Unterbringen einer Sensorspule zum Abgreifen des Messbereichs bereitgestellt ist, wobei der Ringraum am zweiten Längsende von außerhalb der Übertragungsspule axial zugänglich ist. Das erfindungsgemäße Antriebsrad weist eine Radnabe, die Radnabenübertragungseinheit und mindestens eines der Ritzel auf, das auf dem Ritzelnabenträger drehstarr montiert ist, wobei zum Übertragen des Drehmoments von dem Ritzel auf die Radnabe diese mittels der Abtriebskupplung mit den Ritzeln gekoppelt ist. Das erfindungsgemäße hilfsangetriebene Fahrzeug mit dem Antriebsrad weist ein Antriebsaggregat mit einer Steuerungseinrichtung zum dosierten hilfsweisen Antreiben des Antriebsrads und die im Ringraum zu Abgreifen des Messbereichs der Übertragungsspule untergebrachte Sensorspule auf, mit der die Steuerungseinrichtung derart ansteuerbar ist, dass das Antriebsmoment des Antriebsaggregats abgestimmt auf das von der Radnabenübertragungseinheit übertragene Drehmoment ist.

Dadurch, dass aufgrund der fliegenden Lagerung der Übertragungshülse durch das Radiallager der Ringraum von außerhalb der Übertragungshülse axial zugänglich ist, ist vorteilhaft die Verkabelung für die innenliegende Sensorspule am zweiten Längsende nach außerhalb der Übertragungshülse zu führen, wobei etwa keine zusätzlichen Durchgänge für die Verkabelung in der Radachse vorgesehen zu werden brauchen. Somit ist der Aufbau der Radnabenübertragungseinheit vorteilhaft einfach. Außerdem ist die Übertragungshülse vorteilhaft kurz ausgeführt, obwohl der Messbereich ausreichend lang für die erforderliche Messgenauigkeit bereitgestellt ist. Somit ist vorteilhaft der Bauraum der Radnabenübertragungseinheit klein, so dass die Radnabenübertragungseinheit leicht in das Antriebsrad integrierbar ist.

Bevorzugt ist es, dass die Abtriebskupplung beim Übertragen des Drehmoments das zweite Längsende der Übertragungshülse um die Radachse zentriert. Dadurch ist vorteilhaft erreicht, dass, obwohl die Übertragungshülse mit dem Radiallager an dem ersten Längsende fliegend gelagert ist, die Übertragungshülse am zweiten Längsende bei einer entsprechenden mechanischen Belastung bei der Übertragung des Drehmoments dennoch rund läuft. Somit ist vorteilhaft die mechanische Biegewechselbelastung der Übertragungshülse bei der Übertragung des Drehmoments gering. Außerdem würde ein entsprechendes Unrundlaufen der Übertragungshülse am zweiten Längsende zu einer Verfälschung der mit der Sensorspule im Messbereich gemessenen Drehmomentstärke zur Folge haben. Dem wirkt die zentrierende Wirkung der Abtriebskupplung am zweiten Längsende entgegen, so dass die Drehmomentübertragungseinrichtung eine hohe Messgenauigkeit hat.

Bevorzugtermaßen ist die Abtriebskupplung ein Freilauf. Hierbei ist es bevorzugt, dass die Abtriebskupplung ein Sperrklinkenfreilauf mit mindestens drei über den Umfang im gleichen Abstand angeordneten Sperrklinken oder ein Walzenfreilauf mit mindestens drei über den Umfang im gleichen Abstand angeordneten und in Antriebsdrehrichtung selbsthemmenden Walzen oder ein Zahnscheibenfreilauf ist. Der Sperrklinkenfreilauf mit seinen mindestens drei gleichmäßig angeordneten Sperrklinken und der Walzenfreilauf mit seinen mindestens drei gleichmäßig angeordneten Walzen haben auf das zweite Längsende eine selbstzentrierende Wirkung um die Radachse. Der Zahnscheibenfreilauf ist über den Umfang gleichmäßig aufgebaut, so dass der Zahnscheibenfreilauf die selbstzentrierende Wirkung hat. Die Zentrierung um die Radachse bedeutet, dass beim Übertragen des Drehmoments von der Abtriebskupplung das zweite Längsende der Übertragungshülse konzentrisch um die Radachse zentriert gehalten ist, wobei etwa ein Biegemoment auf die Übertragungshülse so gut wie nicht auftritt.

Der Ritzelnabenträger ist bevorzugt eine Hülse, die den Messbereich der Übertragungshülse nach außen überdeckt. Dadurch ist der Messbereich von der Übertragungshülse nach außen geschützt, wodurch der Messbereich etwa schädlichen Umwelteinflüssen, wie beispielsweise Schmutz oder Schläge, nicht ausgesetzt ist. Außerdem erhält der Ritzelnabenträger dadurch eine derartig große Länge, dass eine Mehrzahl an Ritzeln gut nebeneinanderliegend auf dem Ritzelnabenträger unterbringbar ist. Bevorzugt ist es ferner, dass die Außenseite des Ritzelnabenträgers ein Keilwellenprofil aufweist, das von wechselweise parallel zur Radachse verlaufenden Nuten und Stegen gebildet ist. Das Ritzel weist eine entsprechend dem Keilwellenprofil negativ geformte Nabe auf, so dass das Ritzel in Umfangsrichtung formschlüssig auf den Ritzelnabenträger drehstarr montierbar ist.

Die Antriebskupplung weist bevorzugt einen Axialblock auf, der mit der Radachse axial fest gekuppelt ist, an dem der Ritzelnabenträger und/oder die Übertragungshülse zur axialen Fixierung anliegt. Hierbei ist es bevorzugt, dass der Axialblock ein von dem Ritzelnabenträger radial nach innen vorstehender und an diesem befestigter Vorsprung ist, an dem die Übertragungshülse axial abgestützt ist. Ferner ist es bevorzugt, dass die Antriebskupplung je ein Gewinde an der Außenseite des ersten Längsendes der Übertragungshülse und an der Innenseite des Ritzelnabenkörpers aufweist, wobei die Gewinde ineinandergreifen und um die Radachse gängig sind sowie die Stirnseite des ersten Längsendes der Übertragungshülse am Axialblock anliegt. Der Windungssinn der Gewinde ist bevorzugt so, dass beim Übertragen des Drehmoments die Übertragungshülse zum Axialblock in Axialrichtung hin getrieben ist. Alternativ bevorzugt ist es, dass die Antriebskupplung eine Passung zwischen der Außenseite des ersten Längsendes der Übertragungshülse und der Innenseite des Ritzelnabenkörpers aufweist, wobei die Stirnseite des ersten Längsendes der Übertragungshülse am Axialblock anliegt. Bevorzugtermaßen weist die Antriebskupplung eine Klebeverbindung zwischen dem Ritzelnabenträger und der Übertragungshülse auf.

Mit den genannten bevorzugten Ausführungsformen der Antriebskupplung ist eine stabile und kompakte Bauweise der Antriebskupplung erzielt, wobei das Radiallager im Axialerstreckungsbereich der Antriebskupplung zwischen der Innenseite der Übertragungshülse und der Radachse vorgesehen ist. Durch das Fluchten des Radiallagers mit den Gewinden bzw. der Passung ist ein optimaler Kraftfluss beim Übertragen des Drehmoments von der Antriebskupplung zur Abtriebskupplung erzielt. Das Drehmoment wird von dem Ritzel auf den Ritzelnabenträger via die Gewinde bzw. die Passung und die Stirnseite sowie den Axialblock auf die Übertragungshülse übertragen, wobei der Messbereich der Übertragungshülse von dem Radiallager und der Antriebskupplung unmittelbar axial vorsteht. Dadurch ist beim Übertragen des Drehmoments ein Tordieren des Messbereichs ermöglicht, ohne dass auf die Übertragungshülse ein die Drehmomentmessung beeinträchtigendes Biegemoment ausgeübt werden würde.

Der Axialblock ist bevorzugt mit dem Ritzelnabenträger einstückig ausgebildet. Dadurch, dass der Axialblock an dem Ritzelnabenträger radial nach innen vorsteht und die Gewinde an der Übertragungshülse und dem Ritzelnabenträger ausgebildet sind, ist durch die Verschraubung der Gewinde und das Anliegen der Stirnseite des ersten Längsendes am Axialblock ein in Axialrichtung und Radialrichtung stabiler Verbund zwischen dem Ritzelnabenträger und der Übertragungshülse mittels der Antriebskupplung erzielt. Beim Übertragen des Drehmoments von dem Ritzelnabenträger via die Antriebskupplung zur Übertragungshülse werden von der Antriebskupplung etwa keine störenden Verwerfungen und Spannungsungleichheiten auf den Messbereich übertragen. Somit kann der Messbereich unmittelbar an der Antriebskupplung, d.h. am Radiallager und den Gewinden bzw. der Passung, anschließen, wodurch etwa Übergänge zum Abschwächen von Spannungsspitzen im Messbereich nicht vorgesehen zu werden brauchen. Dadurch kann die Gesamtlänge der Übertragungshülse knapp gehalten werden, obwohl der Messbereich in seiner notwendigen Axiallänge vorgesehen ist. Außerdem kann der Messbereich bis hin zur Abtriebskupplung geführt sein, wodurch auch dort etwaige Übergänge zum Abmildern von Verwerfungen und Spannungsungleichheiten zwischen der Abtriebskupplung und dem Messbereich nicht vorgesehen zu werden brauchen.

Durch das Vorsehen der Abtriebskupplung können der Ritzelnabenträger und die Übertragungshülse aus jeweils für sie geeignete Materialien hergestellt sein, bevorzugt für den Ritzelnabenträger eine Aluminiumlegierung und für die Übertragungshülse hochfester nichtmagnetischer Stahl. Im Übrigen ist das hilfsangetriebene Fahrzeug bevorzugtermaßen ein Elektrofahrrad.

Im Folgenden wird eine bevorzugte Ausführungsform der Erfindung anhand der beigefügten schematischen Zeichnungen erläutert. Es zeigen:

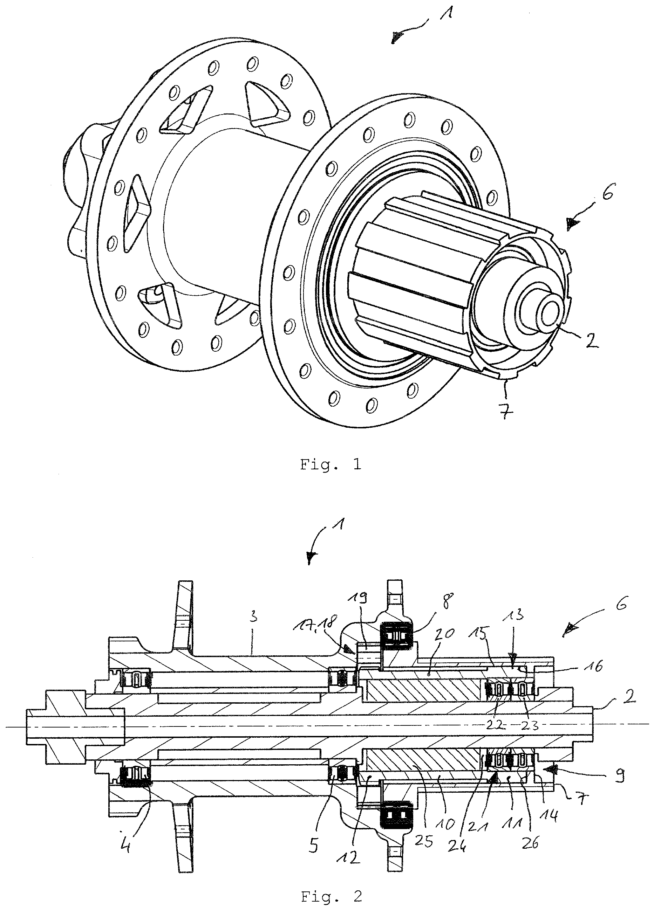

Figur 1 eine perspektivische Darstellung einer Radnabe und
Figur 2 eine Darstellung eines Längsschnitts der Radnabe aus Figur 1.

Wie es aus den Figuren ersichtlich ist, weist eine Radnabe 1 eine Radachse 2 und einen Nabenkörper 3 auf. Der Nabenkörper 3 ist konzentrisch um die Radachse 2 mittels eines ersten Radnabenlagers 4 und eines zweiten Radnabenlagers 5 verdrehbar auf der Radachse 2 gelagert. Die Radachse 2 erstreckt sich axial vollständig durch den Radnabenkörper 3, wobei das erste Radnabenlager 4 an dem einen Längsende des Radnabenkörpers 3 und das zweite Radnabenlager 5 am anderen Längsende des Radnabenkörpers 2 angeordnet ist. Am Radnabenkörper 3 sind zwei im Axialabstand zueinander angeordnete Kränze vorgesehen, in denen Speichen einhängbar sind.

Die Radnabe 1 weist ferner eine Radnabenübertragungseinheit 6 auf, die seitlich neben dem zweiten Radnabenlager 5 und jenseits des ersten Radnabenlagers 4 um die Radachse 2 angeordnet ist. Die Radnabenübertragungseinheit 6 weist einen Ritzelnabenträger 7 auf, der als eine Hülse ausgebildet ist und an seiner Außenseite ein Keilwellenprofil für die Montage mindestens eines Ritzels auf dem Ritzelnabenträger 7 aufweist. Der Ritzelnabenträger 7 steht seitlich vom Nabenkörper 3 vor, wobei die Radachse 2 sich sowohl durch den Nabenkörper 3 als auch durch den Ritzelnabenträger 7 erstreckt. An der dem Radnabenkörper 3 zugewandten Seite des Ritzelnabenträgers 7 ist der Ritzelnabenträger 7 mit einem Ritzelnabenträgerlager 8 an dem Nabenkörper 3 radial gelagert, wobei das Ritzelnabenträgerlager 8 mit seinem Innenring auf dem Ritzelnabenträger 7 und mit seinem Außenring am Nabenkörper 3 anliegt.

Die Radnabenübertragungseinheit 6 weist eine Drehmomentübertragungseinrichtung 9 auf, die eine Übertragungshülse 10 aufweist. Die Übertragungshülse 10 ist innerhalb des Ritzelnabenträgers 7 und so wie der Ritzelnabenträger 7 konzentrisch um die Radachse 2 angeordnet. Die Übertragungshülse 10 weist ein erstes Längsende 11 und ein zweites Längsende 12 auf, wobei das erste Längsende 11 dem Nabenkörper 3 abgewandt und das zweite Längsende 12 dem Nabenkörper 3 zugewandt angeordnet ist. Am ersten Längsende 11 ist die Übertragungshülse 10 mit dem Ritzelnabenträger 7 mittels einer Antriebskupplung 13 gekoppelt. Die Antriebskupplung 13 weist einen Axialblock 14 auf, der radial nach innen am Ritzelnabenträger 7 vorsteht. Der Axialblock 14 ist einstückig am Ritzelnabenträger 7 ausgebildet und am dem Nabenkörper 3 abgewandten Längsende des Ritzelnabenträgers 7 angeordnet. Ferner weist die Antriebskupplung 13 ein Innengewinde 15 auf, das an der Außenseite des ersten Längsendes 11 der Übertragungshülse 10 ausgebildet ist. Zum Innengewinde 15 korrespondierend weist die Antriebskupplung 13 ein Außengewinde 16 auf, das an der Innenseite des Ritzelnabenträgers 7 ausgebildet ist, wobei der Axialblock 14 an der dem Nabenkörper 3 abgewandten Seite des Ritzelnabenträgers 7 angeordnet ist. Die Übertragungshülse 10 ist mit ihrem Außengewinde 16 mit dem Innengewinde 15 des Ritzelnabenträgers 7 verschraubt, wobei das Außengewinde 16 an die Stirnseite 26 des ersten Längsendes 11 der Übertragungshülse 10 sich anschließt, wodurch die Stirnseite 26 am Axialblock 14 anliegt.

Am zweiten Längsende 12 der Übertragungshülse 10 ist eine Abtriebskupplung 17 ausgebildet, die von einem Sperrklinkenfreilauf 18 gebildet ist. Der Sperrklinkenfreilauf 18 weist mindestens drei über den Umfang gleichmäßig verteilte Sperrklinken 19 auf, wobei der Sperrklinkenfreilauf 18 mit seinen Sperrklinken 19 beim Übertragen eines Drehmoments zentrierend auf das zweite Längsende 12 der Übertragungshülse 10 wirkt.

Die Übertragungshülse 10 ist aus magnetisch codiertem Material hergestellt, wobei der Bereich zwischen der Antriebskupplung 13 und der Abtriebskupplung 17 als ein Messbereich 20 ausgebildet ist. Im Axialbereich der Antriebskupplung 13, d.h. im Bereich der axialen Erstreckung der Gewinde 15, 16 und des Axialblocks 14, ist eine fliegende Lagerung 21 für die Übertragungshülse 10 vorgesehen. Die fliegende Lagerung 21 ist gebildet von einem ersten Rillenkugellager 22 und einem zweiten Rillenkugellager 23, die nebeneinanderliegend auf der Radachse 2 angeordnet sind und die Übertragungshülse 10 am ersten Längsende 11 im Radialabstand von der Radachse 2 abstützen. Unmittelbar neben den Rillenkugellagern 22, 23 erstreckt sich der Messbereich 20 bis unmittelbar zur Antriebskupplung 13. Unterhalb des Messbereichs 20 ergibt sich ein Ringraum 24, in dem eine Sensorspule 25 aufweisend zwei Spulen zum Abgreifen des Messbereichs 20 angeordnet ist. Die Verkabelung der Sensorspule 25 ist am zweiten Längsende 12 der Übertragungshülse 10 verlegt, da hier aufgrund der fliegenden Lagerung 21 die Übertragungshülse 10 von außen her zugänglich ist. Die Verkabelung ist zwischen der Radachse 2 und der Übertragungshülse 10 angeordnet. Etwa Durchgänge für die Verkabelung in der Übertragungshülse 10 oder der Radachse sind nicht vorgesehen.

Zum Antreiben des Nabenkörpers 3 wirkt auf das Ritzel das Drehmoment, das entsprechend einem Antriebsdrehsinn orientiert ist. Der Sperrklinkenfreilauf 18 ist in die Radnabe 1 so eingebaut, dass die Sperrklinken 19 im Antriebsdrehsinn sperren. Das Drehmoment wird von dem Ritzel via das Keilwellenprofil des Radnabenträgers 7 auf diesen übertragen. Durch die Verschraubung der Gewinde 15, 16 und das Anliegen der Stirnseite 26 am Axialblock 14 wird das Drehmoment vom Radnabenträger 7 auf das erste Längsende 11 der Übertragungshülse 10 übertragen. Die radiale Abstützung und Lagerung der Übertragungshülse 10 wird von den Rillenkugellagern 22, 23 bewerkstelligt. Am zweiten Längsende 12 der Übertragungshülse 10 wird mittels des Sperrklinkenfreilaufs 18 das Drehmoment auf den Nabenkörper 3 übertragen. Die Längsenden 11, 12 sind via den Messbereich 20 drehstarr gekoppelt, wodurch der Messbereich 20 tordiert wird. Das auf dem Messbereich 20 aufgebrachte Magnetisierungsmuster verändert sich in Abhängigkeit der Stärke der Torsion. Diese Veränderung wird von der Sensorspule 25 erfasst. Durch die Verkabelung der Sensorspule 25 werden deren elektrischen Signalen nach außerhalb der Radnabe 1 geführt.

### Bezugszeichenliste

- 1: Radnabe
- 2: Radachse
- 3: Nabenkörper
- 4: erstes Radnabenlager
- 5: zweites Radnabenlager
- 6: Radnabenübertragungseinheit
- 7: Ritzelnabenträger
- 8: Ritzelnabenträgerlager
- 9: Drehmomentübertragungseinrichtung
- 10: Übertragungshülse
- 11: erstes Längsende
- 12: zweites Längsende
- 13: Antriebskupplung
- 14: Axialblock
- 15: Innengewinde
- 16: Außengewinde
- 17: Abtriebskupplung
- 18: Sperrklinkenfreilauf
- 19: Sperrklinke
- 20: Messbereich
- 21: fliegende Lagerung
- 22: erstes Rillenkugellager
- 23: zweites Rillenkugellager
- 24: Ringraum
- 25: Sensorspule
- 26: Stirnseite

## Patentansprüche

1. Radnabenübertragungseinheit für ein Antriebrad (1) eines Fahrzeugs, mit einer Radachse (2), einem konzentrisch zur Radachse (2) angeordneten Ritzelnabenträger (7), auf den zum Antreiben des Antriebrads (1) mindestens ein Ritzel drehstarr montierbar ist, und einer radial zwischen dem Ritzelnabenträger (7) und der Radachse (2) angeordneten Drehmomentübertragungseinrichtung (9), die eine konzentrisch zur Radachse (2) angeordnete und aus einem magnetisch codierten Material hergestellte Übertragungshülse (10) mit einem ersten Längsende (11), an dem eine Antriebskupplung (13) vorgesehen ist, via die das erste Längsende (11) und der Ritzelnabenträger (7) verdrehstarr miteinander gekuppelt sind, und einem dem ersten Längsende (11) abgewandt und im Axialabstand dazu angeordneten zweiten Längsende (12) aufweist, an dem eine Abtriebskupplung (17) vorgesehen ist, via die ein Drehmoment auf das Antriebsrad von der Übertragungshülse (10) übertragbar ist, **dadurch gekennzeichnet, dass** axial zwischen den Kupplungen (13, 17) ein Messbereich (20) der Übertragungshülse (10) zum Messen des Drehmoments mithilfe der unter dem Einfluss des Drehmoments sich ändernden magnetischen Eigenschaften des magnetisch codierten Materials der Übertragungshülse (10) ausgebildet ist, wobei die Übertragungshülse (10) an ihrem ersten Längsende im Axialerstreckungsbereich der Antriebskupplung (13) auf der Radachse (2) mit einem Radiallager (21) fliegend gelagert und im Radialabstand zur Radachse (2) abgestützt ist, wodurch radial zwischen der Übertragungshülse (10) im Messbereich (20) und der Radachse (2) ein Ringraum (20) zum Unterbringen einer Sensorspule (25) zum Abgreifen des Messbereichs (20) bereitgestellt ist, wobei der Ringraum (20) am zweiten Längsende (12) von außerhalb der Übertragungshülse (10) axial zugänglich ist.

2. Radnabenübertragungseinheit gemäß Anspruch 1, wobei die Abtriebskupplung (17) beim Übertragen des Drehmoments das zweite Längsende (12) der Übertragungshülse (10) um die Radachse (2) zentriert.

3. Radnabenübertragungseinheit gemäß Anspruch 2, wobei die Abtriebskupplung (17) ein Freilauf ist.

4. Radnabenübertragungseinheit gemäß Anspruch 3, wobei die Abtriebskupplung ein Sperrklinkenfreilauf (18) mit mindestens drei über den Umfang in gleichem Abstand angeordneten Sperrklinken (19) oder ein Walzenfreilauf mit mindestens drei über den Umfang in gleichem Abstand angeordneten und in Antriebsdrehrichtung selbsthemmenden Walzen oder ein Zahnscheibenfreilauf ist.

5. Radnabenübertragungseinheit gemäß einem der Ansprüche 1 bis 4, wobei der Ritzelnabenträger (7) eine Hülse ist, die den Messbereich (20) der Übertragungshülse (10) radial nach außen überdeckt.

6. Radnabenübertragungseinheit gemäß einem der Ansprüche 1 bis 5, wobei die Antriebskupplung (13) einen Axialblock (14) aufweist, der mit der Radachse (2) axialfest gekuppelt ist, an den der Ritzelnabenträger (7) und/oder die Übertragungshülse (10) zur Axialfixierung anliegt.

7. Radnabenübertragungseinheit gemäß Anspruch 6, wobei der Axialblock (14) ein von dem Ritzelnabenträger (7) radial nach innen vorstehender und an diesem befestigter Vorsprung ist, an dem die Übertragungshülse (10) axial abgestützt ist.

8. Radnabenübertragungseinheit gemäß Anspruch 7, wobei die Antriebskupplung (13) je ein Gewinde (15, 16) an der Außenseite des ersten Längsendes (11) der Übertragungshülse (10) und an der Innenseite des Ritzelnabenträgers (7) aufweist, wobei die Gewinde (15, 16) innereinandergreifen und um die Radachse (2) gängig sind sowie die Stirnseite (26) des ersten Längsendes (11) der Übertragungshülse (10) am Axialblock (14) anliegt.

9. Radnabenübertragungseinheit gemäß Anspruch 8, wobei der Windungssinn der Gewinde (15, 16) so ist, dass beim Übertragen des Drehmoments die Übertragungshülse (10) zum Axialblock (14) in Axialrichtung hin getrieben ist.

10. Radnabenübertragungseinheit gemäß Anspruch 7, wobei die Antriebskupplung (13) eine Passung zwischen der Außenseite des ersten Längsendes (11) der Übertragungshülse (10) und der Innenseite des Ritzelnabenträgers (7) aufweist, wobei die Stirnseite (26) des ersten Längsendes (11) der Übertragungshülse (10) am Axialblock (14) anliegt.

11. Radnabenübertragungseinheit gemäß einem der Ansprüche 1 bis 10, wobei die Antriebskupplung (13) eine Klebeverbindung zwischen dem Ritzelnabenträger (7) und der Übertragungshülse (10) aufweist.

12. Radnabenübertragungseinheit gemäß einem der Ansprüche 1 bis 11, wobei der Ritzelnabenträger (7) aus einer Aluminiumlegierung und die Übertragungshülse (10) aus einem hochfesten nichtmagnetischen Stahl sind.

13. Antriebrad mit einer Radnabe (1), einer Radnabenübertragungseinheit (6) gemäß einem der Ansprüche 1 bis 12 und mindestens eines der Ritzel, das auf dem Ritzelnabenträger (7) drehstarr montiert ist, wobei zum Übertragen des Drehmoments von dem Ritzel auf die Radnabe (1) diese mittels der Abtriebskupplung (17) mit dem Ritzel gekoppelt ist.

14. Hilfsangetriebenens Fahrzeug mit einem Antriebsrad gemäß Anspruch 13, einem Antriebsaggregat mit einer Steuerungseinrichtung zum dosierten hilfsweisen Antreiben des Antriebsrads und die im Ringraum (24) zum Abgreifen des Messbereichs der Übertragungshülse (10) untergebrachte Sensorspule (25), mit der die Steuerungseinrichtung derart ansteuerbar ist, dass das Antriebsmoment des Antriebsaggregats abgestimmt auf das von der Radnabenübertragungseinheit (6) übertragende Drehmoment ist.

15. Hilfsangetriebenens Fahrzeug gemäß Anspruch 13, wobei das hilfsangetriebenen Fahrzeug ein Elektrofahrrad ist.

## Claims

1. Wheel hub transmission unit for a drive wheel (1) of a vehicle, wherein the wheel hub transmission unit (6) comprises a wheel axle (2), a pinion hub carrier (7) being concentrically arranged with respect to the wheel axle (2), wherein a pinion can be mounted on the pinion hub carrier (7) in a torsionally rigid manner, and a torque transmission device (9) being arranged radially between the pinion hub carrier (7) and the wheel axle (2), wherein the torque transmission device (9) comprises a transmission sleeve (10) being arranged concentrically to the wheel axle (2) and being made from a magnetically coded material, wherein the transmission sleeve (10) comprises a first longitudinal end (11) on which a drive coupling (13) is provided, wherein the first longitudinal end (11) and the pinion hub carrier (7) are coupled via the drive coupling (13) in a rotationally rigid manner, wherein the transmission sleeve (10) comprises a second longitudinal end (12) facing away and being arranged in axial distance to the first longitudinal end (11), wherein an output coupling (17) is provided on the second longitudinal end (12), wherein a torque can be transmitted to the drive wheel from the transmission sleeve (10) via the output coupling (17), **characterized in that** a measuring area (20) of the transmission sleeve (10) is formed axially between the couplings (13, 17) for measuring the torque by means of the magnetic properties of the magnetic coded material of the transmission sleeve (10), wherein the magnetic properties change under the influence of the torque, wherein the transmission sleeve (10) is borne on its first longitudinal end in the axial extension area of the drive coupling (13) on the wheel axle (2) with a radial bearing (21) in a cantilever manner and is supported in a radial distance to the wheel axle (2), whereby an annular space (20) for accommodating a sensor coil (25) for tapping off the measuring area (20) is provided radially between the transmission sleeve (10) in the measuring area (20) and the wheel axle (2), wherein the annular space (20) on the second longitudinal end (12) is axially accessible from outside the transmission sleeve (10).

2. Wheel hub transmission unit according to claim 1, wherein the output coupling (17) is centering the second longitudinal end (12) of the transmission sleeve (10) about the wheel axle (2) during the transmission of the torque.

3. Wheel hub transmission unit according to claim 2, wherein the output coupling (17) is a freewheel.

4. Wheel hub transmission unit according to claim 3, wherein the output coupling is a locking pawl freewheel (18) having at least three locking pawls (19) arranged at a same spacing over the circumference of the locking pawl freewheel or a roller freewheel having at least three rollers arranged at a same spacing over the circumference of the roller freewheel, and wherein the at least three rollers are self-locking in drive rotational direction, or a toothed disk freewheel.

5. Wheel hub transmission unit according to any one of claims 1 to 4, wherein the pinion hub carrier (7) is a sleeve that radially covers the measuring area (20) of the transmission sleeve (10) to the outside.

6. Wheel hub transmission unit according to any one of claims 1 to 5, wherein the drive coupling (13) comprises an axial block (14) coupled in an axially fixed manner to the wheel axle (2), wherein the pinion hub carrier (7) lies against the axial block (14) and/or the transmission sleeve (10) to axially fix the pinion hub carrier (7).

7. Wheel hub transmission unit according to claim 6, wherein the axial block (14) is a protrusion that radially protrudes to the inside from the pinion hub carrier (7) and is mounted on the pinion hub carrier (7), wherein the transmission sleeve (10) is axially supported by the protrusion.

8. Wheel hub transmission unit according to claim 7, wherein the drive coupling (13) comprises a respective thread (15, 16) on the end face of the first longitudinal end (11) of the transmission sleeve (10) and on the inner end of the pinion hub carrier (7), wherein the threads (15, 16) engage into one another and are threaded about the wheel axle (2) as well as the front face (26) of the first longitudinal end (11) of the transmission sleeve (10) lies against the axial block (14).

9. Wheel hub transmission unit according to claim 8, wherein the winding direction of the threads (15, 16) is configured such that the transmission sleeve (10) is driven towards the axial block (14) in axial direction during transmission of the torque.

10. Wheel hub transmission unit according to claim 7, wherein the drive coupling (13) comprises a locating fit between the outer side of the first longitudinal end (11) of the transmission sleeve (10) and the inner side of the pinion hub carrier (7), wherein the front face (26) of the first longitudinal end (11) of the transmission sleeve (10) lies against the axial block (14).

11. Wheel hub transmission unit according to any one of claims 1 to 10, wherein the drive coupling (13) comprises an adhesive bond between the pinion hub carrier (7) and the transmission sleeve (10).

12. Wheel hub transmission unit according to any one of claims 1 to 11, wherein the pinion hub carrier (7) is made from an aluminum alloy and the transmission sleeve (10) is made from a high-strength non-magnetic steel.

13. Drive wheel with a wheel hub (1), a wheel hub transmission unit (6) according to any one of claims 1 to 12 and at least one of the pinions mounted in a torsionally rigid manner on the pinion hub carrier (7), wherein the wheel hub (1) is coupled by the output coupling (17) to the pinion to transmit the torque from the pinion to the wheel hub (1).

14. Auxiliary drive driven vehicle with a drive wheel according to claim 13, a drive assembly with a control device configured to auxiliary drive the drive wheel in measured quantities, and the sensor coil (25) being accommodated in the annular space (24) to tap off the measuring area of the transmission sleeve (10), wherein the control device can be controlled by the sensor coil (25) such that the drive moment of the drive assembly is adapted to the torque transmitted by the wheel hub transmission unit (6).

15. Auxiliary drive driven vehicle according to claim 13, wherein the auxiliary drive driven vehicle is an electric bicycle.

## Revendications

1. Unité de transmission de moyeu, pour une roue d'entraînement (1) d'un véhicule, comprenant un axe de roue (2), un porte-moyeu à pignon (7) agencé de façon concentrique à l'axe de la roue (2) et sur lequel, pour entraîner la roue d'entraînement (1), au moins un pignon est monté avec blocage de rotation, et un dispositif de transmission de couple (9) disposé radialement entre le porte-moyeu à pignon (7) et l'axe de la roue (2), ayant un manchon de transmission (10) disposé concentriquement à l'axe de la roue (2) et constitué en une matière à codage magnétique, et ayant une première extrémité longitudinale (11), sur laquelle est prévu un embrayage d'entraînement (13) par l'intermédiaire duquel la première extrémité longitudinale (11) et le porte-moyeu à pignon (7) sont couplés l'un à l'autre d'une façon liée en rotation, et, à l'opposé de la première extrémité longitudinale (11) et à une certaine distance axiale à celle-ci, est située une deuxième extrémité longitudinale (12) sur laquelle est disposé un accouplement de sortie (17) par l'intermédiaire duquel un couple est apte à être transféré par le manchon de transmission (10) à la roue d'entraînement, **caractérisé en ce qu'**axialement, entre les accouplements (13, 17), est formée une zone de mesure (20) du manchon de transmission (10) pour mesurer le couple avec l'aide du matériau magnétiquement codé du manchon de transmission (10) dont les caractéristiques magnétiques changent sous l'influence du couple, dans lequel le manchon de transmission (10), à sa première extrémité longitudinale dans le secteur d'extension axial de l'embrayage d'entraînement (13) sur l'axe de roue (2) est agencé avec un palier radial (21) et est supporté à une certaine distance radiale à l'axe de la roue (2), de sorte qu'il est aménagé, radialement entre le manchon de transmission (10) au niveau de la zone de mesure (20) et l'axe de la roue (2), un espace annulaire (20) destiné à loger un capteur d'impulsions (25) pour le prélèvement de la zone de mesure (20), l'espace annulaire (20) étant axialement accessible à la deuxième extrémité longitudinale (12), depuis l'extérieur du manchon de transmission (10).

2. Unité de transmission de moyeu selon la revendication 1, dans laquelle l'accouplement de sortie (17), lors du transfert du couple, réalise un centrage de la deuxième extrémité longitudinale (12) du manchon de transmission (10) autour de l'axe de la roue (2).

3. Unité de transmission de moyeu selon la revendication 2, dans laquelle l'accouplement de sortie (17) est une roue libre.

4. Unité de transmission de moyeu selon la revendication 3, dans laquelle l'accouplement de sortie est une roue libre à cliquets de verrouillage (18) ayant au moins trois cliquets de verrouillage (19) disposés sur la circonférence, selon un même écartement, ou est une roue libre à rouleaux ayant au moins trois rouleaux disposés sur la circonférence, selon un même écartement, et étant autobloquants dans le sens de rotation d'entraînement, ou est une roue libre à disque denté.

5. Unité de transmission de moyeu selon l'une des revendications 1 à 4, dans laquelle le porte-moyeu à pignon (7) est un manchon qui recouvre radialement la zone de mesure (20) du manchon de transmission (10) vers l'extérieur.

6. Unité de transmission de moyeu selon l'une quelconque des revendications 1 à 5, dans laquelle l'embrayage d'entraînement (13) comprend un bloc axial (14) qui est relié à l'axe de roue (2) de façon axialement fixe, contre lequel le porte-moyeu à pignon (7) et / ou le manchon de transmission (10) sont appliqués de façon à être fixés axialement.

7. Unité de transmission moyeu selon la revendication 6, dans laquelle le bloc axial (14) est une saillie radiale dirigée vers l'intérieur et solidaire du porte-moyeu à pignon (7), sur laquelle est supporté axialement le manchon de transmission (10).

8. Unité de transmission moyeu selon la revendication 7, dans laquelle l'embrayage d'entraînement (13) comporte un filetage respectif (15, 16) sur le côté extérieur de la première extrémité longitudinale (11) du manchon de transmission (10) et sur le côté intérieur du porte-moyeu à pignon (7), dans laquelle ces filetages (15, 16) viennent en engagement l'un dans l'autre et sont mobiles autour de l'axe de roue (2), de sorte que la face frontale (26) de la première extrémité longitudinale (11) du manchon de transmission (10) est placée contre le bloc axial (14).

9. Unité de transmission de moyeu selon la revendication 8, dans laquelle la direction d'enroulement des filetages (15, 16) est telle que, lors de la transmission du couple, le manchon de transmission (10) est entraîné vers le bloc axial (14) dans une direction axiale.

10. Unité de transmission de moyeu selon la revendication 7, dans laquelle l'embrayage d'entraînement (13) est placé de façon ajustée entre le côté extérieur de la première extrémité longitudinale (11) du manchon de transmission (10) et le côté intérieur du porte-moyeu à pignon (7), et dans laquelle la face frontale (26) de la première extrémité longitudinale (11) du manchon de transmission (10) est placée contre le bloc axial (14).

11. Unité de transmission de moyeu selon l'une des revendications 1 à 10, dans laquelle l'embrayage d'entraînement (13) présente une liaison adhésive entre le porte-moyeu à pignon (7) et ledit manchon de transmission (10).

12. Unité de transmission de moyeu selon l'une des revendications 1 à 11, dans laquelle le porte-moyeu à pignon (7) est fait en un alliage d'aluminium et le manchon de transmission (10) est fait à partir d'un acier amagnétique à haute résistance.

13. Roue d'entraînement, comprenant un moyeu de roue (1), une unité de transmission pour moyeu (6) selon l'une quelconque des revendications 1 à 12 et au moins un pignon monté sur le porte-moyeu à pignon (7) de manière liée en rotation, pour transmettre le couple depuis le pignon au moyeu de roue (1) au moyen de la venue en prise de l'accouplement de sortie (17) avec le pignon.

14. Véhicule à moteur d'entraînement auxiliaire ayant une roue d'entraînement selon la revendication 13, un groupe d'entraînement ayant un dispositif de commande pour l'entraînement subsidiaire dosé de la roue d'entraînement, le capteur d'impulsions (25) étant logé dans l'espace annulaire (24) pour le prélèvement de la zone de mesure du manchon de transmission (10), le dispositif de commande étant commandé par ledit capteur d'impulsions (25) de telle sorte que le couple d'entraînement du groupe d'entraînement est coordonné à un couple transmis par l'unité de transmission pour moyeu (6).

15. Véhicule à moteur d'entraînement auxiliaire comprenant une roue d'entraînement selon la revendication 13, dans lequel le véhicule à moteur d'entraînement auxiliaire est une bicyclette électrique.
